# EUROPÄISCHE PATENTSCHRIFT

(11) **EP 3 303 016 B1**
(45) Veröffentlichungstag und Bekanntmachung des Hinweises auf die Patenterteilung: **04.08.2021**
(21) Anmeldenummer: 16727689.8
(22) Anmeldetag: 07.06.2016
(51) Int. Cl.: B60C 29/06, B60C 23/04, B60C 29/00

(54) **REIFENVENTIL FÜR EINEN LUFTREIFEN EINES FAHRZEUGS**
TIRE VALVE FOR A PNEUMATIC TIRE OF A VEHICLE
VALVE DE PNEUMATIQUE POUR PNEUMATIQUE DE VÉHICULE

(30) Priorität: 08.06.2015 DE 102015210461
(43) Veröffentlichungstag der Anmeldung: 11.04.2018
(73) Patentinhaber: WEGMANN automotive GmbH, 97209 Veitshöchheim (DE)
(72) Erfinder: PALAORO, Renato, 89522 Heidenheim (DE)
(74) Vertreter: Lohr, Jöstingmeier & Partner
(86) Internationale Anmeldenummer: PCT/EP2016/062840
(87) Internationale Veröffentlichungsnummer: WO 2016/198373

(56) Entgegenhaltungen:
- EP-A2- 1 277 601
- WO-A1-2011/097823
- WO-A1-2014/108926

## Beschreibung

Die vorliegende Erfindung betrifft ein Reifenventil für einen Luftreifen eines Fahrzeugs, insbesondere eines Kraftfahrzeugs wie Nutzfahrzeug oder Personenkraftwagen.

Reifenventile der gattungsgemäßen Art werden verwendet, um Druckluft in den Luftreifen eines Kraftfahrzeugs zu pumpen oder auch um Druckluft aus dem Luftreifen abzulassen. Bezogen auf die Strömungsrichtung der Luft beim Aufpumpen des Luftreifens weisen dementsprechend solche Reifenventile ein Lufteinlassende zum Anschließen einer Druckluftquelle und ein Luftauslassende zum Positionieren innerhalb des Luftreifens auf. Der Anschluss der Druckluftquelle erfolgt in der Regel über ein Klemmelement einer Luftpumpe beziehungsweise eines Kompressors, das auf ein endseitiges Gewinde am Lufteinlassende eines Ventilschafts des Reifenventils aufgeklemmt wird.

In jüngerer Zeit wurde vorgeschlagen, am Luftauslassende des Reifenventils beziehungsweise des entsprechenden Ventilschafts des Reifenventils den Luftdrucksensor für ein Reifenluftdrucküberwachungssystem anzuschließen. Ein solcher Luftdrucksensor weist ein Gehäuse auf, das gemäß einer Ausführungsform, wie sie auch die vorliegende Erfindung betrifft, gelenkig am Ventilschaft befestigt beziehungsweise befestigbar ist, um das Gehäuse an das Felgenbett einer den Luftreifen aufnehmenden Felge zu drücken. Gemäß EP 1 277 601 A2 geschieht dies mittels einer als Hohlschraube ausgeführten Befestigungsschraube, die in eine Ventilbohrung des Ventilschafts eingreift und durch deren Anziehen das Gehäuse des Luftdrucksensors gegen das Felgenbett gedrückt wird.

Da eine solche Befestigungsschraube mit ihrem freien Ende im Inneren des Luftreifens positioniert ist beziehungsweise auf der dem Inneren des Luftreifens zugewandten Seite des Felgenbetts, wird gemäß EP 1 277 601 A2 vorgeschlagen, sowohl das Anziehen einer Überwurfmutter gegen die Felge als auch das Anziehen der Befestigungsschraube innerhalb einer Befestigungsbohrung gegen den Ventilschaft auf der dem Innenraum im Luftreifen abgewandten Seite des Felgenbetts zu ermöglichen. Gemäß der vorgeschlagenen Lösung weist die Überwurfmutter an ihrer Innenseite einen Vorsprung auf, der als Sollbruchelement ausgeführt ist, sodass bei einem anfänglichen Aufschraubmoment beim Aufschrauben der Überwurfmutter auf den Ventilschaft zunächst die Überwurfmutter zusammen mit dem Ventilschaft relativ zu der Befestigungsschraube verdreht wird, sodass sich die Befestigungsschraube in eine Gewindebohrung am Luftauslassende des Ventilschafts einschraubt und dadurch das Gehäuse des Luftdrucksensors gegen den Ventilschaft anzieht, und bei einem weiteren Aufschrauben der Überwurfmutter auf das Außengewinde des Ventilschafts mit einem entsprechend größeren Aufschraubmoment das Sollbruchelement abgeschert wird und sich die Überwurfmutter relativ zum Ventilschaft verdreht und dadurch gegen die Felge beziehungsweise die Außenseite des Felgenbetts angezogen wird, um die Felge zwischen der Überwurfmutter und einem am Luftauslassende des Ventilschafts vorgesehenen Anschlag zu verklemmen.

EP 1 277 601 A2 zeigt in allen Ausführungsbeispielen eine aus Kunststoff hergestellte Ventilkappe, deren maximaler Außendurchmesser aufgrund der notwendigen Materialstärke vergleichsweise groß ist, sodass er über den Innendurchmesser der Überwurfmutter herausragt. Gleichwohl wird in EP 1 277 601 A2 angeregt, die Überwurfmutter mit einer aufgeschraubten schlankeren Ventilkappe zu montieren. Dies setzt bisher jedoch voraus, dass aufgrund der vergleichsweise geringen Materialstärke der Ventilkappe die Ventilkappe aus Metall gefertigt wird, um die notwendige Festigkeit zu erreichen. Bei einer solchen vegleichsweise dünnwanderigen Metallkappe tritt jedoch besonders im Winter Kontaktkorrosion auf und die Metallkappe lässt sich nicht mehr vom Ventilschaft lösen. Im Winter ist diese Problematik durch den Kontakt des Ventils beziehungsweise der Ventilkappe mit dem üblicherweise verwendeten Streusalz beziehungsweise Auftaumittel verschärft.

Die vorliegende Erfindung betrifft aufgrund dieser Problematik daher nur Reifenventile mit einer Ventilkappe aus Kunststoff.

WO 2014/108926 A1 schlägt ausgehend von der EP 1 277 601 A2 vor, das Sollbruchelement nicht an der Überwurfmutter sondern am Ventilschaft selbst vorzusehen, um dadurch Standardüberwurfmuttern verwenden zu können.

Obwohl die genannten Ausführungsformen bereits gegenüber älteren Ausführungsformen, die einen Schraubenantrieb der Befestigungsschraube im Bereich des Luftauslassendes des Ventilschafts vorsehen, siehe beispielsweise EP 0 751 017 A2, in der Praxis eine deutlich leichtere Montage des Luftdrucksensors am Felgenbett ermöglichen, ist bei den genannten Ausführungsformen als nachteilig anzusehen, dass die Überwurfmutter aufgrund ihres Zusammenwirkens mit dem Sollbruchelement am Ventilschaft beziehungsweise aufgrund des radial nach innen von der Überwurfmutter vorstehenden Sollbruchelementes immer nur dann auf dem Ventilschaft montiert werden kann, wenn zuvor eine die Ventilbohrung am Lufteinlassende verschließende Ventilkappe entfernt wurde. Aufgrund des hohen Zeitdrucks und der Vielzahl von zu montierenden Luftdrucksensoren in Werkstätten hat sich das notwendige Entfernen und spätere Wiederaufschrauben der Ventilkappen in der Praxis als bedeutender Nachteil erwiesen. Wenn die Ventilkappen hingegen einem neuen Reifenventil nur lose beigelegt werden, um das Abschrauben zu vermeiden, besteht die Gefahr, dass die Ventilkappe beim Transport verloren geht. Darüber hinaus besteht die Gefahr der Verschmutzung der Füllöffnung in dem Ventil, wenn die Kappe beim Transport nur lose beigelegt ist.

Der vorliegenden Erfindung liegt daher die Aufgabe zugrunde, ein Reifenventil mit einer Ventilkappe aus Kunststoff der eingangs dargestellten Art derart weiterzuentwickeln, dass die genannten Nachteile vermieden werden.

Die erfindungsgemäße Aufgabe wird durch ein Reifenventil mit den Merkmalen von Anspruch 1 gelöst. In den abhängigen Ansprüchen sind vorteilhafte und besonders zweckmäßige Ausgestaltungen der Erfindung angegeben.

Ein erfindungsgemäßes Reifenventil für einen Luftreifen eines Fahrzeugs, insbesondere Kraftfahrzeugs wie Nutzkraftwagen oder Personenkraftwagen, weist ein Lufteinlassende zum Anschließen einer Druckluftquelle und ein Luftauslassende zum Positionieren innerhalb des Luftreifens auf. Es ist ferner ein Ventilschaft vorgesehen, der sich vom Lufteinlassende zum Luftauslassende erstreckt und der auf seinem äußeren Umfang ein Außengewinde für eine Überwurfmutter trägt. Im Bereich des Luftauslassendes ist am Ventilschaft ein Anschlag für ein den Luftreifen tragendes Felgenbett vorgesehen, sowie ein Befestigungsgewinde für einen innerhalb des Luftreifens zu positionierenden Luftdrucksensor. Prinzipiell kann jedoch anstelle eines Luftdrucksensors auch eine andere am Ventilschaft zu befestigende Einrichtung vorgesehen sein.

Die Überwurfmutter des Reifenventils weist ein Innengewinde auf, das zum Aufschrauben auf das Außengewinde auf dem Ventilschaft vorgesehen ist, um das Felgenbett zwischen der Überwurfmutter und dem Anschlag des Ventilschafts zu verklemmen, wenn der Ventilschaft durch eine Felgenbohrung durchgesteckt wird, sodass das Lufteinlassende auf einer Seite der Felge beziehungsweise des Felgenbetts positioniert ist und das Luftauslassende auf der anderen Seite der Felge beziehungsweise des Felgenbetts positioniert ist, und die Überwurfmutter auf das Außengewinde aufgeschraubt wird.

Das erfindungsgemäße Reifenventil weist ferner eine Ventilkappe aus Kunststoff auf, die am Lufteinlassende auf den Ventilschaft aufschraubbar oder aufgeschraubt ist. Somit ist die Ventilkappe nicht aus Metall hergestellt und entsprechend können Korrosionsprobleme vermieden werden. Entsprechend ist an diesem Lufteinlassende des Ventilschafts ein Ventilkappengewinde vorgesehen. Die Ventilkappe weist einen maximalen Außendurchmesser auf, das heißt, falls die Ventilkappe auf ihrem äußeren Umfang zylindrisch ist, erstreckt sich die Ventilkappe auf diesem maximalen Außendurchmesser, oder falls die Ventilkappe auf ihrem äußeren Umfang einen variierenden Durchmesser aufweist, ist der genannte maximale Außendurchmesser der größte existierende Außendurchmesser der Ventilkappe.

Wie beim eingangs genannten Stand der Technik ist ein Verformungselement auf dem äußeren Umfang des Ventilschafts und/oder einem inneren Umfang der Überwurfmutter vorgesehen. Das Verformungselement ist derart ausgeführt, dass es sich beim Aufschrauben der Überwurfmutter auf den Ventilschaft verformt. Gemäß einer Ausführungsform der Erfindung ist die Verformung reversibel, gemäß einer anderen Ausführungsform der Erfindung irreversibel. Das Verformungselement ist derart ausgeführt, dass bei einem anfänglichen Aufschraubmoment beim Aufschrauben der Überwurfmutter auf den Ventilschaft, nachdem das Verformungselement die Überwurfmutter und den Ventilschaft gegeneinander gegen eine Relativverdrehung blockiert, zunächst der Ventilschaft zusammen mit der Überwurfmutter relativ zum Felgenbett verdreht wird beziehungsweise verdrehbar ist, bei einem vollständig oder zumindest weitgehend verformungsfreien Zustand des Verformungselementes, und bei einem folgenden relativ größeren Drehmoment die Überwurfmutter unter Verformung des Verformungselementes relativ zum Ventilschaft verdreht wird beziehungsweise verdrehbar ist. Dadurch wird ermöglicht, dass sich eine entsprechende Befestigungsschraube oder Befestigungsmutter in das Befestigungsgewinde am Luftauslassende des Ventilschafts einschraubt beziehungsweise aufschraubt und sowohl die Befestigung des Luftdrucksensors oder der anderen am Ventilschaft zu befestigenden Einrichtung als auch die Befestigung des Reifenventils am Felgenbett ist von der Seite des Lufteinlassendes des Ventilschafts aus möglich ist, ohne ein Konterelement für die Befestigungsschraube oder Befestigungsmutter.

Erfindungsgemäß weist die Überwurfmutter und bei Anordnung des Verformungselementes am inneren Umfang der Überwurfmutter auch das Verformungselement einen minimalen Innendurchmesser auf, der größer ist als der maximale Außendurchmesser der Ventilkappe.

Somit ist es möglich, trotz vorgesehenem Verformungselement am Ventilschaft, mit welchem der Innendurchmesser der Überwurfmutter zur Verformung des Verformungselementes zusammenarbeitet, oder bei Ausführungsform des Verformungselementes am Innendurchmesser der Überwurfmutter trotz radial nach innen vorstehendem Verformungselement die Überwurfmutter bei auf den Ventilschaft aufgeschraubter Ventilkappe auf den Ventilschaft aufzuschrauben.

Die erfindungsgemäße Lösung ermöglicht, dass ein Reifenventil mit aufgeschraubter Ventilkappe an einen Reifenmonteur, insbesondere Großserien-Reifenmonteur geliefert wird und der Reifenmonteur den Luftdrucksensor am Reifenventil bzw. Ventilschaft montieren kann, ohne die Ventilkappe zu entfernen. Das Befüllen des Reifens mit Luftdruck kann dann mit einer sogenannten Glocke erfolgen, wie dies in der Großserie üblich ist, ohne dass hierzu das Reifenventil verwendet wird. Vielmehr erfolgt die Befüllung über den Felgen- bzw. Reifenrand. Gegenüber herkömmlichen Ausführungsformen spart sich der Monteur somit sowohl das Abschrauben als auch das folgende Aufschrauben der Ventilkappe, was sich bei der Vielzahl der zu montierenden Reifen zu einer erheblichen Zeitersparnis summiert.

Gemäß der Erfindung ist die Ventilkappe aus Kunststoff ausgeführt. Eine solche Kunststoffkappe weist gegenüber einer Metallkappe den Vorteil auf, dass sie kostengünstig hergestellt werden kann und eine Korrosion zwischen dem in der Regel aus Metall gefertigten Ventilschaft und der Ventilkappe vermieden wird.

Eine solche Korrosion kann in der Praxis zu einer unerwünschten nicht lösbaren Verbindung zwischen der Ventilkappe und dem Ventilschaft führen. Obwohl eine solche Ventilkappe aus Kunststoff in der Praxis einen vergleichweise größeren Durchmesser als eine Ventilkappe aus Metall aufweist, ermöglicht die Erfindung die Montage des Luftdrucksensors, ohne die Ventilkappe zu entfernen. Beispielweise weist die Ventilkappe einen maximalen Außendurchmesser von 9 mm oder mehr, insbesondere von 9,2 mm oder mehr auf. Die Überwurfmutter, und bei Anordnung des Verformungselementes am inneren Umfang der Überwurfmutter auch das Verformungselement, können einen minimalen Innendurchmesser von wenigstens 9,4 mm und/oder insbesondere einen Innendurchmesser aufweisen, der wenigstens 0,2 mm größer ist als der maximale Außendruchmesser der Ventilkappe.

Gemäß einer Ausführungsform der Erfindung ist das Verformungselement unmittelbar auf dem Außengewinde beziehungsweise im innerhalb des axialen Abschnitts Außengewindes des Ventilschafts positioniert. Gemäß einer anderen Ausführungsform ist das Verformungselement unmittelbar auf dem Innengewinde beziehungsweise im innerhalb des axialen Abschnitts des Innengewindes der Überwurfmutter positioniert. Bei beiden Ausführungsformen kommt eine Positionierung in einem mittleren axialen Abschnitt des Gewindes in Betracht. Gemäß einer alternativen Ausführungsform der Erfindung ist das Verformungselement am lufteinlassendseiteigen oder luftauslassendseitigen Ende des Innengewindes der Überwurfmutter oder des Außengewindes des Ventilschafts positioniert.

Bei einigen der genannten Ausführungsformen tritt eine Verformung des Verformungselementes schon relativ frühzeitig beim Aufschrauben der Überwurfmutter auf den Ventilschaft auf, wodurch in der Regel eine intensivere Verformung stattfindet. Bei anderen Ausführungsformen hingegen tritt die Verformung erst auf, wenn die Überwurfmutter vollständig oder nahezu vollständig auf den Ventilschaft aufgeschraubt wird, wodurch die Verformung in der Regel weniger intensiv ist.

Gemäß einer vorteilhaften Ausführungsform der Erfindung ist das Verformungselement als elastisch und/oder plastisch verformbarer Ring ausgeführt. Der Ring ist beispielsweise aus Kunststoff oder aus Gummi hergestellt, jedoch kommen auch andere Materialien in Betracht, beispielsweise Aluminium. Dadurch kann das gewünschte Verformungsverhalten erreicht werden und insbesondere zugleich eine Abdichtung.

Um den Ring besonders leicht auf dem Ventilschaft oder in der Überwurfmutter montieren zu können und gegebenenfalls durch einen neuen Ring austauschen zu können, ist es günstig, wenn der Ring über seinem Umfang unterbrochen ist, insbesondere mit einer einzigen Unterbrechung.

Gemäß einer alternativen Ausgestaltung ist der Ring als über seinem Umfang geschlossener Ring ausgeführt. Der Ring kann beispielsweise aus einem Elastomer hergestellt sein.

Eine Ausführungsform der Erfindung sieht vor, dass das Verformungselement als Beschichtung auf dem äußeren Umfang des Ventilschafts und/oder dem inneren Umfang der Überwurfmutter ausgeführt ist, wobei die Beschichtung als einzelner Abschnitt oder Punkt über dem Umfang ausgeführt sein kann, als über dem Umfang geschlossener Ring ausgeführt sein kann oder als über dem Umfang verteilt angeordnete Beschichtung mit einzelnen Umfangsabschnitten oder Punkten ausgeführt sein kann. Eine solche Beschichtung umfasst beispielsweise Polyamid oder modifiziertes Polyamid. Auch ein anderer Werkstoff, insbesondere Kunststoff, beispielsweise auch PTFE kommt in Betracht.

Gemäß einer vorteilhaften der Erfindung ist vorgesehen, dass der Ventilschaft auf seinem äußeren Umfang oder die Überwurfmutter auf ihrem inneren Umfang eine Ringnut aufweist, in welche der Ring einsetzbar beziehungsweise eingesetzt ist. Hierdurch wird ein sicheres Halten des Rings durch Ausbildung einer Hinterschneidung erreicht.

Gemäß einer Ausführungsform der Erfindung ist das Verformungselement lösbar vorgesehen, das heißt bei Anordnung auf dem äußeren Umfang des Ventilschafts lösbar vom Ventilschaft und bei Anordnung auf dem inneren Umfang der Überwurfmutter lösbar von der Überwurfmutter. Alternativ kann das Verformungselement auch einteilig oder stoffschlüssig mit dem Ventilschaft oder der Überwurfmutter verbunden sein, um einen besonders sicheren Halt zu erreichen. Die letzte Variante ist besonders dann geeignet, wenn das Verformungselement reversibel verformbar ist, also zum mehrfachen Aufschrauben der Überwurfmutter auf den Ventilschaft verwendet werden kann.

Gemäß einer besonders vorteilhaften Ausführungsform der Erfindung ist das Befestigungsgewinde am Luftauslassende des Ventilschafts als Gewindebohrung ausgeführt und auf dem Luftauslassende des Ventilschafts ist ein Luftdrucksensor mit einem Gehäuse mittels einer Befestigungsschraube, die in die Gewindebohrung einschraubbar oder eingeschraubt ist, am Ventilschaft befestigt oder befestigbar, wobei die Befestigungsschraube insbesondere frei von einem Schraubenantrieb ist. Bekanntlich wird ein solcher Schraubenantrieb durch einen Innensechskant oder Außensechskant, Torx (®) oder eine andere drehmomentübertragende Form, an welche ein Werkzeug angreift, gebildet.

Bei der zuletzt genannten Ausführungsform ist es besonders günstig, wenn die Gewindebohrung in einem vom Lufteinlassende zum Luftauslassende führenden Luftkanal mündet, sodass über das Lufteinlassende Druckluft in den Luftreifen gepumpt werden kann, und die Befestigungsschraube als Hohlschraube ausgeführt ist, sodass diese Druckluft durch die Befestigungsschraube geleitet wird.

Jedoch ist es auch möglich, anstelle einer Hohlschraube eine Vollschraube als Befestigungsschraube zu verwenden und das Luftauslassende des Luftkanals in einer Bohrung im Ventilschaft vorzusehen, die zusätzlich zu der Gewindebohrung für die Befestigungsschraube ausgeführt ist, insbesondere schräg oder senkrecht zu dieser verläuft.

Die Erfindung soll nachfolgend anhand von Ausführungsbeispielen und den Figuren exemplarisch beschrieben werden.

Es zeigen:
- Figur 1: ein erstes Ausführungsbeispiel der Erfindung in einer seitlichen Draufsicht und einem Axialschnitt;
- Figur 2: eine alternative Ausgestaltung der Erfindung in Ansichten entsprechend der Figur 1;
- Figur 3: eine weitere alternative Gestaltung der Erfindung in entsprechenden Ansichten;
- Figur 4: eine vierte mögliche Gestaltung der Erfindung, wiederum in den entsprechenden Ansichten.

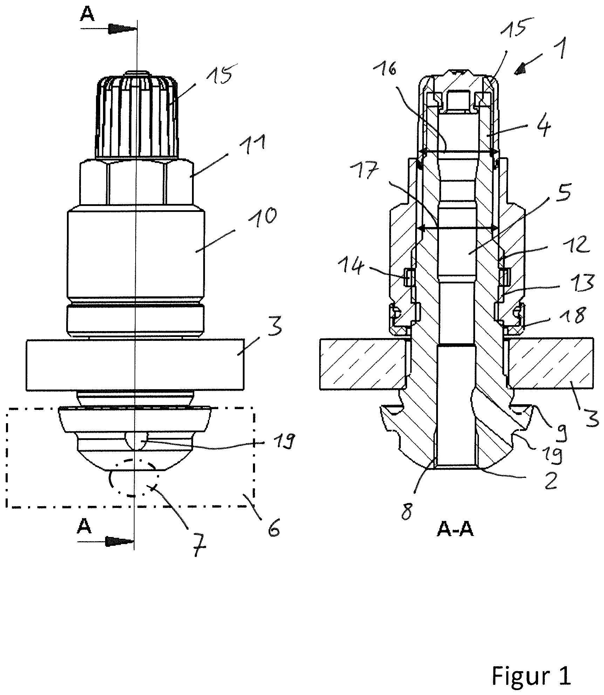

In der Figur 1 ist ein erfindungsgemäß ausgeführtes Reifenventil dargestellt, umfassend ein Lufteinlassende 1 und ein Luftauslassende 2. Das Luftauslassende 2 ist auf jener Seite des Felgenbetts 3 positioniert, die nach dem Montieren eines Luftreifens (nicht dargestellt) dem Inneren des Luftreifens zugewandt ist.

Wie nur in der Figur 1 in der seitlichen Ansicht schematisch dargestellt ist, ist am Luftauslassende 2 des Reifenventils beziehungsweise von dessen Ventilschaft 4, der vom Lufteinlassende 1 zum Luftauslassende 2 reicht und einen entsprechenden Luftkanal 5 aufweist, ein Luftdrucksensor 6 mittels einer Befestigungsschraube 7 montiert, die in ein Befestigungsgewinde 8 am Luftauslassende 2 des Ventilschafts 4 eingeschraubt ist. Mit 6 könnte aber genauso gut eine andere am Reifenventil zu befestigende Einrichtung dargestellt sein.

Der Ventilschaft 4 weist einen Anschlag 9 auf, mit welchem der Ventilschaft 4 gegen das Felgenbett 3 gezogen wird, wenn die Überwurfmutter 10 auf den Ventilschaft 4 aufgeschraubt wird. Hierfür weist die Überwurfmutter 10 einen entsprechenden Antrieb, hier beispielhaft in Form eines Außensechskants 11, auf. Die Überwurfmutter 10 weist ein Innengewinde 12 auf und der Ventilschaft 4 weist ein entsprechendes Außengewinde 13 auf, um das Aufschrauben der Überwurfmutter 10 zu ermöglichen. Im in der Figur 1 gezeigten Ausführungsbeispiel ist auf das Außengewinde 13 das Verformungselement 14 in Form eines Rings aufgebracht.

Beim Aufschrauben der Überwurfmutter 10 auf den Ventilschaft 4 schlägt zunächst das dem Felgenbett 3 zugewandte stirnseitige Ende der Überwurfmutter 10 stirnseitig an dem Verformungselement 14 an, wodurch ein weiteres Aufschrauben der Überwurfmutter 10 auf das Außengewinde 13 zunächst blockiert wird und ein Drehen der Überwurfmutter 10 zu einem entsprechenden gleichgerichteten Antrieb des Ventilschafts 4 führt, sodass die Befestigungsschraube 7 in das Befestigungsgewinde 8 eingezogen wird, bis der Luftdrucksensor 6 gegen das Felgenbett 3 beziehungsweise das stirnseitige Ende (Luftauslassende 2) des Ventilschafts 4 angezogen ist und ein weiteres Eindrehen der Befestigungsschraube 7 in das Befestigungsgewinde 8 blockiert wird. In der Regel ist, um ein Mitdrehen der Befestigungsschraube 7 beim Drehen des Ventilschafts 4 zu vermeiden, ein entsprechender Formschluss zwischen der Befestigungsschraube 7 und dem Gehäuse des Luftdrucksensors 6 vorgesehen. Anschließend verformt bei einem entsprechend höheren Anschraubmoment das weitere Drehen der Überwurfmutter 10 das Verformungselement 14, weil sich die Überwurfmutter 10 über dieses hinweg dreht, und nach Überschreiten dieses entsprechenden Losbrechmomentes wird die Überwurfmutter 10 gegen das Felgenbett 3 angezogen.

Am Lufteinlassende 1 ist auf dem Ventilschaft 4 eine Ventilkappe 15 aufgeschraubt. Diese Ventilkappe 15 weist einen maximalen Außendurchmesser 16 auf, der kleiner ist als der minimale Innendurchmesser 17 der Überwurfmutter 10. Dadurch ist es möglich, die Überwurfmutter 10 auf den Ventilschaft 4 aufzuschrauben, auch wenn die Ventilkappe 15 auf den Ventilschaft 4 aufgeschraubt ist. Entsprechend ist der Außendurchmesser des Verformungselementes 14 größer als der maximale Außendurchmesser 16 der Ventilkappe 15, um ein Zusammenwirken mit dem minimalen Innendurchmesser 17 der Überwurfmutter 10 sicherzustellen.

Im gezeigten Ausführungsbeispiel weist die Überwurfmutter 10 an ihrem am Felgenbett 3 anschlagenden Ende, das heißt hier zumindest an der entsprechenden Stirnseite, einen Überzug oder eine Abdeckung 18 auf, die das Festziehen der Überwurfmutter 10 gegen das Felgenbett 3 ohne Beschädigung der Oberfläche des Felgenbetts 3 erleichtert und/oder eine entsprechende Abdichtung herstellt. Dies ist jedoch nicht zwingend notwendig.

Bei der in der Figur 1 dargestellten Ausführungsform ist ferner ein Abzweig 19 am Luftauslassende 2 vom Luftkanal 5 vorgesehen, sodass die Befestigungsschraube 7 nicht zwingend als Hohlschraube ausgeführt sein muss. Auch dies könnte jedoch auch anders gewählt werden.

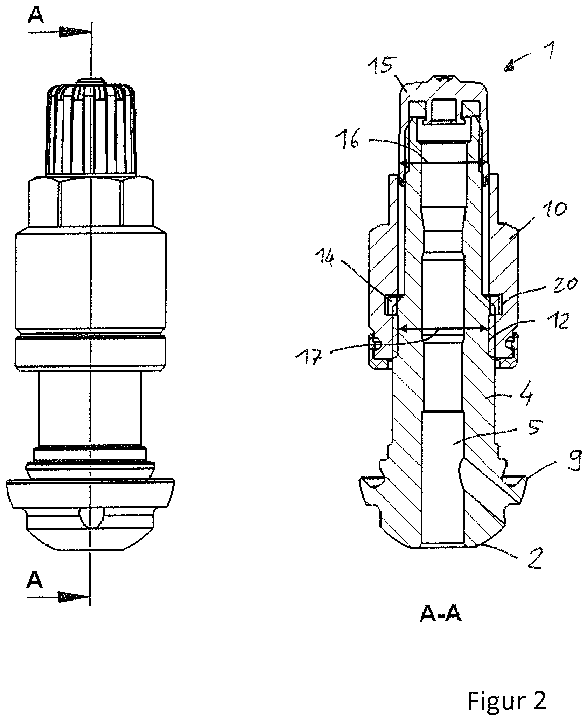

Die Ausführungsform gemäß der Figur 2 unterscheidet sich dadurch von jener der Figur 1, dass das Verformungselement 14 in eine Ringnut 20 innerhalb der Überwurfmutter 10 eingebracht ist. Im gezeigten Ausführungsbeispiel ist die Ringnut am vom Luftauslassende 2 abgewandten Ende des Innengewindes 12 vorgesehen. Dies könnte jedoch auch anders sein. Beispielsweise könnte die Ringnut 20 innerhalb des axialen Bereichs des Innengewindes 12 vorgesehen sein oder am anderen Ende des Innengewindes 12. Auch hier ist der minimale Innendurchmesser 17 der Überwurfmutter 10 und bei diesem Ausführungsbeispiel auch der des Verformungselementes 14 größer als der maximale Außendurchmesser 16 der Ventilkappe 15.

Das Befestigungsgewinde, die Befestigungsschraube und der Luftdrucksensor sind in der Figur 2 nicht dargestellt.

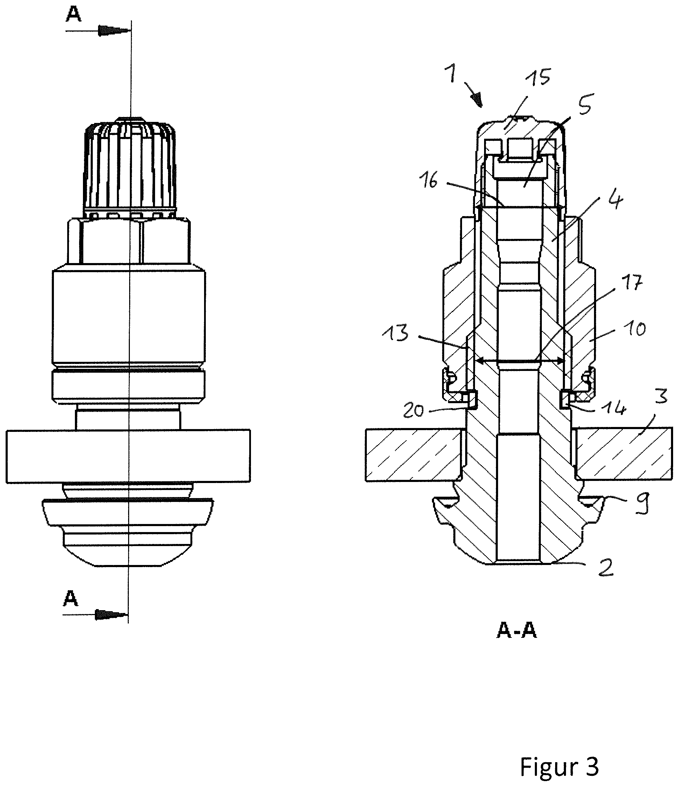

Beim Ausführungsbeispiel gemäß der Figur 3 ist abweichend von den zuvor dargestellten Ausführungsformen das Verformungselement 14 im Bereich des dem Felgenbett 3 zugewandten Endes der Überwurfmutter 10 positioniert, hier in einer Ringnut 20 im Ventilschaft 4. Die Überwurfmutter 10 schlägt demnach erst dann am Verformungselement 14 an, nachdem sie vollständig über das Außengewinde 13 des Ventilschafts 4 geschraubt wurde. Auch hier ist jedoch der maximale Außendurchmesser 16 der Ventilkappe 15 kleiner als der minimale Innendurchmesser 17 der Überwurfmutter 10.

Abweichend von den Gestaltungen in den Figuren 1 und 2 ist kein Abzweig im Bereich des Luftauslassendes 2 des Luftkanals 5 vorgesehen. Dies ist jedoch nicht zwingend.

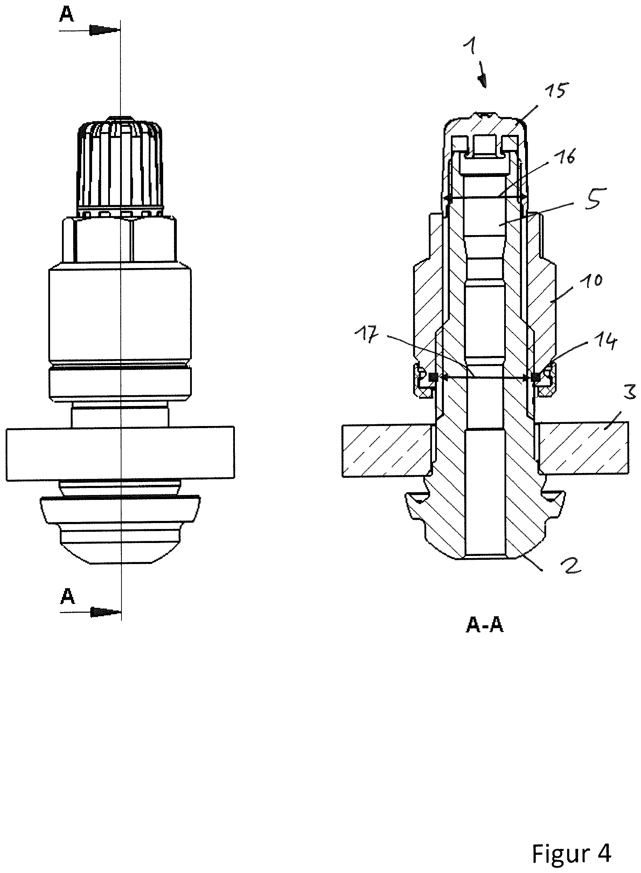

Bei der Ausführungsform gemäß der Figur 4 ist das Verformungselement 14 im Bereich des dem Felgenbett 3 zugewandten Endes der Überwurfmutter 10 positioniert, hier jedoch befestigt an der Überwurfmutter 10, beispielsweise in einer Ringnut. Demgemäß weist nicht nur die Überwurfmutter 10 sondern auch das Verformungselement 14 einen minimalen Innendurchmesser 17 auf, der größer ist als der maximale Außendurchmesser 16 der Ventilkappe 15.

## Patentansprüche

1. Reifenventil für einen Luftreifen eines Fahrzeugs, insbesondere Kraftfahrzeugs wie Nutzkraftwagen oder Personenkraftwagen,
mit einem Lufteinlassende (1) zum Anschließen einer Druckluftquelle und einem Luftauslassende (2) zum Positionieren innerhalb des Luftreifens;
mit einem Ventilschaft (4), der sich vom Lufteinlassende (1) zum Luftauslassende (2) erstreckt und auf seinem äußeren Umfang ein Außengewinde (13) sowie im Bereich des Luftauslassendes (2) einen Anschlag (9) für ein den Luftreifen tragendes Felgenbett (3) und ein Befestigungsgewinde (8) für einen innerhalb des Luftreifens zu positionierenden Luftdrucksensor (6) oder eine andere am Ventilschaft zu befestigende Einrichtung aufweist,
mit einer Überwurfmutter (10), die ein Innengewinde (12) aufweist, zum Aufschrauben auf das Außengewinde (13), um das Felgenbett (3) bei durch eine Felgenbohrung durchgestecktem Ventilschaft (4) zwischen der Überwurfmutter (10) und dem Anschlag (9) zu verklemmen,
mit einer Ventilkappe (15) aus Kunststoff, die am Lufteinlassende (1) auf den Ventilschaft (4) aufschraubbar oder aufgeschraubt ist und einen maximalen Außendurchmesser (16) aufweist,
mit einem Verformungselement (14) auf dem äußeren Umfang des Ventilschafts (4) und/oder einem inneren Umfang der Überwurfmutter (10), das ausgeführt ist, um sich beim Aufschrauben der Überwurfmutter (10) auf den Ventilschaft (4) derart reversibel oder irreversibel zu verformen, dass bei einem anfänglichen Aufschraubmoment zunächst der Ventilschaft (4) zusammen mit der Überwurfmutter (10) relativ zum Felgenbett (3) verdrehbar ist, bei einem zumindest weitgehend verformungsfreien Zustand des Verformungselementes (14), und bei einem folgenden hierzu größeren Aufschraubmoment die Überwurfmutter (10) unter Verformung des Verformungselementes (14) relativ zum Ventilschaft (4) verdrehbar ist; **dadurch gekennzeichnet, dass**
die Überwurfmutter (10) und bei Anordnung des Verformungselementes (14) am inneren Umfang der Überwurfmutter (10) auch das Verformungselement (14) einen minimalen Innendurchmesser (17) aufweist, der größer als der maximale Außendurchmesser (16) der Ventilkappe (15) ist.

2. Reifenventil gemäß Anspruch 1, **dadurch gekennzeichnet, dass** das Verformungselement (14) auf dem Außengewinde (13) des Ventilschafts (4) positioniert ist.

3. Reifenventil gemäß Anspruch 1, **dadurch gekennzeichnet, dass** das Verformungselement (14) auf dem Innengewinde (12) der Überwurfmutter (10) positioniert ist.

4. Reifenventil gemäß Anspruch 1, **dadurch gekennzeichnet, dass** das Verformungselement (14) am lufteinlassendseitigen Ende oder luftauslassendseitigen Ende des Innengewindes (12) oder des Außengewindes (13) positioniert ist.

5. Reifenventil gemäß einem der Ansprüche 1 bis 4, **dadurch gekennzeichnet, dass** das Verformungselement (14) als elastisch und/oder plastisch verformbarer Ring, insbesondere aus Kunststoff oder Gummi ausgeführt ist.

6. Reifenventil gemäß Anspruch 5, **dadurch gekennzeichnet, dass** der Ring über seinem Umfang unterbrochen ist, insbesondere mit einer einzigen Unterbrechung.

7. Reifenventil gemäß einem der Ansprüche 5 oder 6, **dadurch gekennzeichnet, dass** der Ventilschaft (4) auf seinem äußeren Umfang oder die Überwurfmutter (10) auf ihrem inneren Umfang eine Ringnut (20) aufweist, in welche der Ring einsetzbar oder eingesetzt ist.

8. Reifenventil gemäß einem der Ansprüche 1 bis 7, **dadurch gekennzeichnet, dass** das Verformungselement (14) bei Anordnung auf dem äußeren Umfang des Ventilschafts (4) lösbar vom Ventilschaft (4) und bei Anordnung auf dem inneren Umfang der Überwurfmutter (10) lösbar von der Überwurfmutter (10) ausgeführt ist.

9. Reifenventil gemäß einem der Ansprüche 1 bis 7, **dadurch gekennzeichnet, dass** das Verformungselement (14) einteilig oder stoffschlüssig mit dem Ventilschaft (4) oder der Überwurfmutter (10) verbunden ist.

10. Reifenventil gemäß einem der Ansprüche 1 bis 9, **dadurch gekennzeichnet, dass** das Befestigungsgewinde (8) als Gewindebohrung ausgeführt ist und am Luftauslassende (2) ein Luftdrucksensor (6) mit einem Gehäuse mittels einer Befestigungsschraube (7), die in die Gewindebohrung einschraubbar oder eingeschraubt ist, am Ventilschaft (4) befestigbar oder befestigt ist, wobei die Befestigungsschraube (7) insbesondere frei von einem Schraubenantrieb ist.

11. Reifenventil gemäß Anspruch 10, **dadurch gekennzeichnet, dass** die Gewindebohrung in einem vom Lufteinlassende (1) zum Luftauslassende (2) führenden Luftkanal (5) mündet und die Befestigungsschraube (7) als Hohlschraube ausgeführt ist.

12. Reifenventil gemäß einem der Ansprüche 1 bis 11, **dadurch gekennzeichnet, dass** der maximale Außendurchmesser (16) der Ventilkappe (15) wenigstens 9 mm oder wenigstens 9,2 mm beträgt.

## Claims

1. Tire valve for a pneumatic tire of a vehicle, in particular a motor vehicle such as utility vehicles or passenger cars, with an air inlet end (1) for connecting a compressed air source and an air outlet end (2) for positioning within the pneumatic tire;
with a valve shaft (4) extending from the air inlet end (1) to the air outlet end (2) and having an external thread (13) on its outer circumference and in the area of the air outlet end (2) having a stop (9) for a rim well (3) supporting the pneumatic tire and a fastening thread (8) for an air pressure sensor (6) to be positioned inside the pneumatic tire or another device to be fastened to the valve shaft,
with a union nut (10) which has an internal thread (12) for screwing onto the external thread (13), in order to clamp the rim well (3) between the union nut (10) and the stop (9) with the valve shaft (4) pushed through a rim bore, with a valve cap (15) made of plastic, which can be screwed or is screwed to the valve shaft (4) at the air inlet (1) and has a maximum outer diameter (16),
with a deformation element (14) on the outer circumference of the valve shaft (4) and/or an inner circumference of the union nut (10), which is designed to be reversibly or irreversibly deformed when the union nut (10) is screwed onto the valve shaft (4) in such a way that, at an initial screwing-on torque, the valve shaft (4) together with the union nut (10) is at first rotatable relative to the rim well (3), with an at least largely deformation-free state of the deformation element (14), and with a subsequently comparably higher screwing-on torque, the union nut (10) can be rotated relative to the valve shaft (4) by deformation of the deformation element (14);
**characterized in that**
the union nut (10) and, when the deformation element (14) is arranged on the inner circumference of the union nut (10), also the deformation element (14) has a minimum inner diameter (17) which is greater than the maximum outer diameter (16) of the valve cap (15).

2. Tire valve according to claim 1, **characterized in that** the deformation element (14) is positioned on the external thread (13) of the valve shaft (4).

3. Tire valve according to claim 1, **characterized in that** the deformation element (14) is positioned on the internal thread (12) of the union nut (10).

4. Tire valve according to claim 1, **characterized in that** the deformation element (14) is positioned at the air inlet sided end or at the air outlet sided end of the internal thread (12) or the external thread (13).

5. Tire valve according to one of claims 1 to 4, **characterized in that** the deformation element (14) is designed as an elastically and/or plastically deformable ring, in particular made of plastic or rubber.

6. Tire valve according to claim 5, **characterized in that** the ring is interrupted over its circumference, in particular with a single interruption.

7. Tire valve according to one of claims 5 or 6, **characterized in that** the valve shaft (4) on its outer circumference or the union nut (10) has an annular groove (20) on its inner circumference, into which the ring can be inserted or is inserted.

8. Tire valve according to one of claims 1 to 7, **characterized in that** the deformation element (14) when arranged on the outer circumference of the valve shaft (4) is designed detachable from the valve shaft (4), and when arranged on the inner circumference of the union nut (10) is designed detachable from the union nut (10).

9. Tire valve according to one of claims 1 to 7, **characterized in that** the deformation element (14) is connected in one piece or with a material fit to the valve shaft (4) or the union nut (10).

10. Tire valve according to one of claims 1 to 9, **characterized in that** the fastening thread (8) is designed as a threaded bore and at the air outlet end (2), an air pressure sensor (6) with a housing can be fastened or is fastened to the valve shaft (4) by means of a fastening screw (7) which can be screwed or is screwed into the threaded bore, wherein the fastening screw (7) in particular being free of a screw drive.

11. Tire valve according to claim 10, **characterized in that** the threaded bore opens into an air duct (5) leading from the air inlet end (1) to the air outlet end (2) and the fastening screw (7) is designed as a hollow screw.

12. Tire valve according to one of claims 1 to 11, **characterized in that** the maximum outer diameter (16) of the valve cap (15) is at least 9 mm or at least 9,2 mm.

## Revendications

1. Valve de pneumatique pour un pneu de véhicule, en particulier d'un véhicule à moteur tel qu'un véhicule utilitaire ou un véhicule personnel, avec une extrémité d'entrée d'air (1) pour le raccordement d'une source d'air comprimé et une extrémité de sortie d'air (2) à placer à l'intérieur du pneumatique, avec un corps de valve (4) qui s'étend de l'extrémité d'entrée d'air (1) à l'extrémité de sortie d'air (2) et qui présente un filetage extérieur (13) sur sa circonférence extérieure ainsi qu'une butée (9) au niveau de l'extrémité de sortie d'air (2) pour un fond de jante (3) portant le pneumatique et un filetage de fixation (8) pour un capteur de pression d'air (6) à positionner à l'intérieur du pneumatique ou un autre dispositif à fixer sur le corps de valve,
avec un contre-écrou (10) présentant un filetage intérieur (12) à visser sur le filetage intérieur (13) pour serrer le fond de jante (3) entre le contre-écrou (10) et la butée (9) quand le corps de valve (4) est passé à travers un trou percé dans la jante,
avec un capuchon de valve (15) en plastique qui peut être vissé ou est vissé à l'extrémité d'entrée d'air (1) sur le corps de valve (4) et présente un diamètre extérieur maximal (16),
avec un élément déformable (14) sur la circonférence extérieure du corps de valve (4) et/ou une circonférence intérieure du contre-écrou (10), qui est conçu pour se déformer de façon réversible ou irréversible lors du vissage du contre-écrou (10) sur le corps de valve (4), de telle sorte qu'avec un couple de vissage initial, le corps de valve (4) puisse d'abord tourner avec le contre-écrou (10) par rapport au fond de jante (3), dans un état non déformé au moins dans une grande mesure de l'élément déformable (14), et le contre-écrou (10) peut tourner, avec un couple de vissage ultérieur plus important, par rapport au corps de valve (4) avec une déformation de l'élément déformable (14),
**caractérisé en ce que** le contre-écrou (10) et, si l'élément déformable (14) est disposé sur la circonférence intérieure du contre-écrou (10), l'élément déformable (14) aussi présentent un diamètre intérieur minimal (17) qui est plus grand que le diamètre extérieur maximal (16) du capuchon de valve (15).

2. Valve de pneumatique selon la revendication 1, **caractérisée en ce que** l'élément déformable (14) est positionné sur le filetage intérieur (13) du corps de valve (4).

3. Valve de pneumatique selon la revendication 1, **caractérisée en ce que** l'élément déformable (14) est positionné sur le filetage intérieur (12) du contre-écrou (10).

4. Valve de pneumatique selon la revendication 1, **caractérisée en ce que** l'élément déformable (14) est positionné sur l'extrémité du côté de l'entrée d'air ou l'extrémité du côté de la sortie d'air du filetage intérieur (12) ou du filetage intérieur (13).

5. Soupape de pneumatique selon l'une des revendications 1 à 4, **caractérisée en ce que** l'élément déformable (14) est réalisé comme un anneau capable de déformation élastique et/ou plastique, en particulier en matière plastique ou en caoutchouc.

6. Valve de pneumatique selon la revendication 5, **caractérisée en ce que** l'anneau est discontinu sur sa circonférence, en particulier avec une seule solution de continuité.

7. Soupape de pneumatique selon la revendication 5 ou 6, **caractérisée en ce que** le corps de valve (4) présente sur sa circonférence extérieure ou le contre-écrou (10) sur sa circonférence intérieure une rainure annulaire (20) dans laquelle l'anneau peut être inséré ou est inséré.

8. Soupape de pneumatique selon l'une des revendications 1 à 7, **caractérisée en ce que** l'élément déformable (14) est réalisé, s'il est disposé sur la circonférence extérieure du corps de valve (4), de façon à pouvoir être détaché du corps de valve (4) et, s'il est disposé sur la circonférence intérieure du contre-écrou (10), de façon à pouvoir être détaché du contre-écrou (10).

9. Soupape de pneumatique selon l'une des revendications 1 à 7, **caractérisée en ce que** l'élément déformable (14) est assemblé d'une pièce ou par solidarité de matière avec le corps de valve (4) ou le contre-écrou (10).

10. Soupape de pneumatique selon l'une des revendications 1 à 9, **caractérisée en ce que** le filetage de fixation (8) est réalisé comme un alésage fileté et un capteur de pression d'air (6) muni d'un boîtier peut être vissé ou est vissé sur le corps de valve (4) à l'extrémité de sortie d'air (2) au moyen d'une vis de fixation (7) qui peut être vissée ou est vissée dans l'alésage fileté, la vis de fixation (7) étant en particulier dépourvue d'empreinte.

11. Valve de pneumatique selon la revendication 10, **caractérisée en ce que** l'alésage fileté débouche dans un conduit d'air (5) menant de l'extrémité d'entrée d'air (1) à l'extrémité de sortie d'air (2) et la vis de fixation (7) est réalisée comme une vis creuse.

12. Soupape de pneumatique selon l'une des revendications 1 à 11, **caractérisée en ce que** le diamètre extérieur maximal (16) du capuchon de valve (15) mesure au moins 9 mm ou au moins 9,2 mm.
